# EUROPEAN PATENT APPLICATION

(11) **EP 4 603 242 A1**
(43) Date of publication of application: **20.08.2025**
(21) Application number: 23877212.3
(22) Date of filing: 04.10.2023
(51) Int. Cl.: B26D 7/10

(54) **LAMINATE MANUFACTURING METHOD, AND LAMINATE MANUFACTURING DEVICE**

(30) Priority: 14.10.2022 JP 2022165181
(71) Applicant: Dexerials Corporation, Shimotsuke-shi, Tochigi 323-0194 (JP)
(72) Inventor: HINO Tomokazu, Shimotsuke-shi, Tochigi 323-0194 (JP)
(74) Representative: Lavoix
(86) International application number: PCT/JP2023/036241
(87) International publication number: WO 2024/080207

(57) **Abstract**

A laminate manufacturing method includes a bonding step of sticking a lamination film having a base film and an inorganic layer laminated on the base film to a substrate, and a cutting step of cutting the lamination film to match a shape of the substrate, wherein, in the cutting step, a cutting tool is heated to a temperature or higher that is lower by 65°C than a softening point temperature of the base film, and the lamination film is cut.

## Description

### TECHNICAL FIELD

The present invention relates to laminate manufacturing method and laminate manufacturing device. Priority is claimed on Japanese Patent Application No. 2022-165181, filed October 14, 2022, the content of which is incorporated herein by reference.

### BACKGROUND ART

Anti-reflection films are used in various applications. For example, an anti-reflection film is bonded to a monitor glass of an in-vehicle liquid crystal panel. The anti-reflection film is bonded to a substrate such as glass, and then cut into a desired shape.

For example, Patent Document 1 describes that by cutting a film while heating the film to a temperature close to a glass transition temperature of the film, it is possible to prevent cracks and chips from occurring on a cut surface of the film.

### Citation List

### Patent Document

Patent Document 1: Japanese Unexamined Patent Application, First Publication No. 2004-174664

### SUMMARY OF INVENTION

### Technical Problem

In the method described in Patent Document 1, when a size of the substrate increases, equipment for heating the film becomes large and expensive. Further, when the film is heated, deformation and shrinkage of the film occur, making it difficult to cut the film with precision. Furthermore, an adhesive layer that adheres the film to the substrate may foam when heated. This foaming may cause defects in sticking and may impair the aesthetic appearance of a product after the sticking.

The present disclosure has been made in consideration of the above problems, and provides a laminate manufacturing method and a laminate manufacturing device that is capable of curbing occurrence of cracks during cutting.

### Solution to Problem

In order to solve the above problems, the present disclosure proposes the following means.
(1) A laminate manufacturing method according to a first aspect includes a bonding step of sticking a lamination film having a base film and an inorganic layer laminated on the base film to a substrate, and a cutting step of cutting the lamination film to match a shape of the substrate, wherein, in the cutting step, a cutting tool is heated to a temperature or higher that is lower by 65°C than a softening point temperature of the base film, and the lamination film is cut.
(2) In the laminate manufacturing method according to the above aspect, the cutting tool may have a cutting blade.
(3) In the laminate manufacturing method according to the above aspect, the lamination film may have an adhesive layer, the base film, and the inorganic layer, and the inorganic layer may be formed by alternately laminating a low refractive index layer and a high refractive index layer having a refractive index higher than a refractive index of the low refractive index layer.
(4) In the laminate manufacturing method according to the above aspect, a bonding surface of the substrate to which the lamination film is stuck may be curved.
(5) A laminate manufacturing device according to a second aspect includes a bonding device configured to stick a lamination film having a base film and an inorganic layer laminated on the base film to a substrate, and a cutting device configured to cut the lamination film to match a shape of the substrate, wherein the cutting device has a heating mechanism that heats a cutting tool to a temperature or higher that is lower by 65°C than a softening point temperature of the base film.
(6) In the laminate manufacturing device according to the above aspect, the cutting device may include a thermometer configured to measure a temperature of the cutting tool and a control unit configured to move the cutting tool along an outer periphery of the substrate.

### Advantageous Effects of Invention

The laminate manufacturing method and the laminate manufacturing device according to this embodiment can curb the occurrence of cracks during cutting.

### BRIEF DESCRIPTION OF DRAWINGS

[FIG. 1] A diagram illustrating a bonding step in a laminate manufacturing method according to an embodiment.
[FIG. 2] A cross-sectional view illustrating a lamination film according to the embodiment.
[FIG. 3] A diagram illustrating a cutting step in the laminate manufacturing method according to the embodiment.
[FIG. 4] A diagram illustrating measurement of an upper surface of a lamination film after cutting the lamination film of Example 1.
[FIG. 5] A diagram illustrating measurement of an upper surface of a lamination film after cutting the lamination film of Example 2.
[FIG. 6] A diagram illustrating measurement of an upper surface of a lamination film after cutting the lamination film of Comparative example 1.
[FIG. 7] A diagram illustrating measurement of an upper surface of a lamination film after cutting the lamination film of Comparative example 2.
[FIG. 8] A diagram illustrating a relationship of temperature between a center portion and a cutting portion of a razor blade which is a cutting tool in Example 1, Example 2, Comparative example 1, and Comparative example 2.

### DESCRIPTION OF EMBODIMENTS

Hereinafter, this embodiment will be described in detail with reference to the drawings as appropriate. The drawings used in the following description may show characteristic portions of the present disclosure in an enlarged scale for the sake of convenience in order to make the features of the present disclosure easier to understand, and the dimensional ratios of each component may differ from the actual ones. The materials, dimensions, and the like exemplified in the following description are merely examples, and the present disclosure is not limited thereto and can be implemented with appropriate modifications within the scope that achieves effects thereof.

### "Laminate manufacturing method"

A laminate manufacturing method according to this embodiment has a bonding step and a cutting step.

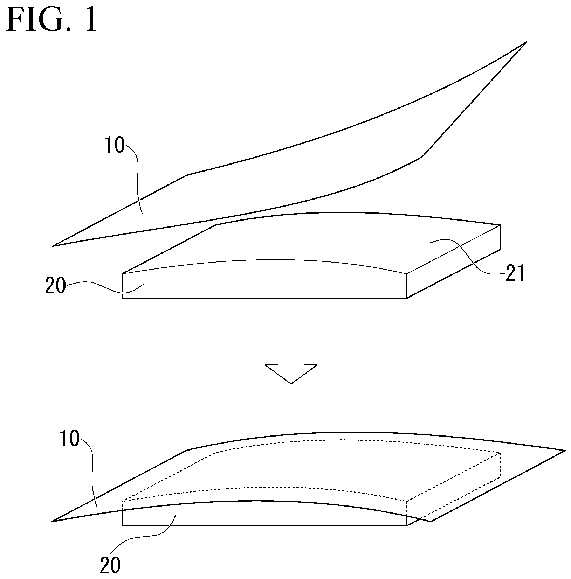

FIG. 1 is a diagram for describing a bonding step in the laminate manufacturing method according to this embodiment. In the bonding step, the lamination film 10 is stuck to the substrate 20.

The substrate 20 is, for example, glass, plastic, or the like. A bonding surface 21 of the substrate 20 to which the lamination film 10 is stuck may be flat or curved. When the bonding surface 21 is curved, the bonding surface 21 may be curved in only one direction within a plane in which the substrate 20 extends, or may be curved in a plurality of directions.

There is no particular limitation on a method for sticking the lamination film 10 to the substrate 20. For example, lamination processing, vacuum processing, or the like may be used.

For example, the lamination film 10 is preferably one size larger than the bonding surface 21 of the substrate 20. After the lamination film 10 is bonded to the substrate 20, an excess portion of the lamination film 10 protrudes from the periphery of the substrate 20.

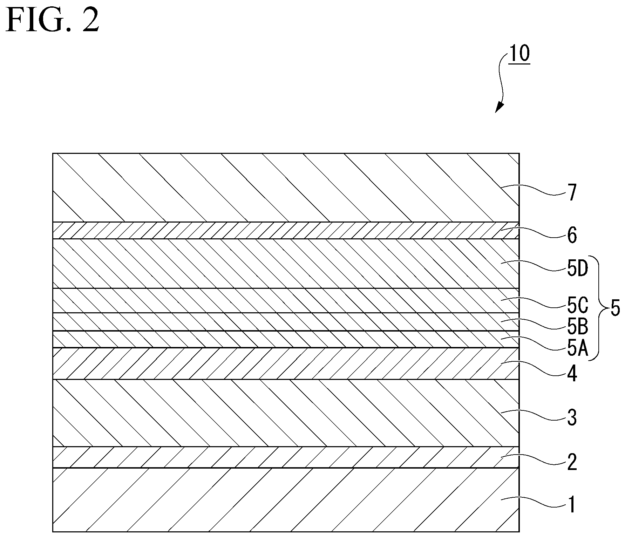

The lamination film 10 includes a base film and an inorganic layer laminated on the base film. FIG. 2 is a cross-sectional view of the lamination film 10 according to this embodiment. The lamination film 10 shown in FIG. 2 includes, for example, a release layer 1, an adhesive layer 2, a base film 3, a hard coat layer 4, an optical functional layer 5, a stain-resistant layer 6, and a protective layer 7. The optical functional layer 5 is an example of the inorganic layer.

The release layer 1 is a layer that protects the adhesive layer 2. The release layer 1 is peeled off at the time of sticking, and the adhesive layer 2 that is exposed by peeling off the release layer 1 is adhered to the substrate 20. The release layer 1 is, for example, a paper or a film coated with a release agent. A thickness of the release layer 1 is, for example, 70 µm or more and 80 µm or less.

The adhesive layer 2 is a layer that is adhered to the substrate 20. The adhesive layer 2 includes, for example, an acrylic adhesive, a silicone adhesive, or a urethane adhesive. A thickness of the adhesive layer 2 is, for example, 10 µm or more and 50 µm or less, and preferably 20 µm or more and 30 µm or less.

The base film 3 is, for example, a plastic film. Examples of materials for the plastic film include polyester-based resins, acetate-based resins, polyethersulfone-based resins, polycarbonate-based resins, polyamide-based resins, polyimide-based resins, polyolefin-based resins, (meth)acrylic-based resins, polyvinyl chloride-based resins, polyvinylidene chloride-based resins, polystyrene-based resins, polyvinyl alcohol-based resins, polyarylate-based resins, and polyphenylene-based sulfide resins.

The base film 3 is made of, for example, a polyester-based resin, an acetate-based resin, a polycarbonate-based resin, or a polyolefin-based resin. For example, a polyethylene terephthalate (PET) base material or a triacetyl cellulose (TAC) base material is suitably used as the base film 3.

A thickness of the base film 3 is, for example, 60 µm or more. When the thickness of the base film 3 is small, cracks may occur in the lamination film 10 due to bending of the film or the like. The thickness of the base film 3 is, for example, 1 mm or less, preferably 500 µm or less, and more preferably 300 µm or less. When the thickness of the base film 3 is too thick, transparency of the base film 3 decreases, and rigidity thereof increases, making the base film 3 more susceptible to cracking.

One surface of the base film 3 may be previously subjected to an etching treatment such as sputtering, corona discharge, ultraviolet irradiation, electron beam irradiation, conversion, and oxidation, and/or an undercoat treatment. By carrying out these treatments in advance, the adhesion of the hard coat layer 4 to be formed on the base film 3 is improved.

The hard coat layer 4 is formed on one surface of the base film 3. The hard coat layer 4 is not particularly limited, and any known hard coat layer may be used. The hard coat layer 4 may contain, for example, a binder resin and a filler. The hard coat layer 4 may further contain a leveling agent.

The binder resin is preferably transparent, and examples thereof include ionizing radiation curable resins that are resins cured by ultraviolet light or electron beams, thermoplastic resins, and thermosetting resins.

Examples of the ionizing radiation curable resin that is the binder resin include ethyl (meth)acrylate, ethylhexyl (meth)acrylate, styrene, methylstyrene, N-vinylpyrrolidone, and the like. The ionizing radiation curable resin may be a compound having two or more unsaturated bonds. Examples of the ionizing radiation curable resin having two or more unsaturated bonds include polyfunctional compounds such as trimethylolpropane tri(meth)acrylate, tripropylene glycol di(meth)acrylate, diethylene glycol di(meth)acrylate, dipropylene glycol di(meth)acrylate, pentaerythritol tri(meth)acrylate, pentaerythritol tetra(meth)acrylate, dipentaerythritol hexa(meth)acrylate, 1,6-hexanediol di(meth)acrylate, neopentyl glycol di(meth)acrylate, trimethylolpropane tri(meth)acrylate, ditrimethylolpropane tetra(meth)acrylate, dipentaerythritol penta(meth)acrylate, tripentaerythritol octa(meth)acrylate, tetrapentaerythritol deca(meth)acrylate, isocyanuric acid tri(meth)acrylate, isocyanuric acid di(meth)acrylate, polyester tri(meth)acrylate, polyester di(meth)acrylate, bisphenol di(meth)acrylate, diglycerol tetra(meth)acrylate, adamantyl di(meth)acrylate, isobornyl di(meth)acrylate, dicyclopentane di(meth)acrylate, tricyclodecane di(meth)acrylate, and ditrimethylolpropane tetra(meth)acrylate. Among them, pentaerythritol triacrylate (PETA), dipentaerythritol hexaacrylate (DPHA) and pentaerythritol tetraacrylate (PETTA) are preferably used as the binder resin. "(Meth)acrylate" refers to methacrylate and acrylate. Moreover, the ionizing radiation curable resin may be one obtained by modifying the above-described compounds with propylene oxide (PO), ethylene oxide (EO), caprolactone (CL), or the like. The ionizing radiation curable resin is preferably an acrylic-based ultraviolet curable resin composition.

Examples of the thermoplastic resin that is the binder resin include styrene-based resins, (meth)acrylic-based resins, vinyl acetate-based resins, vinyl ether-based resins, halogen-containing resins, alicyclic olefin-based resins, polycarbonate-based resins, polyester-based resins, polyamide-based resins, cellulose derivatives, silicone-based resins, and rubber or elastomers. The thermoplastic resin is non-crystalline and soluble in an organic solvent (particularly a common solvent capable of dissolving a plurality of polymers and curable compounds). In particular, from the viewpoint of transparency and weather resistance, the binder resin is preferably a styrene-based resin, a (meth)acrylic-based resin, an alicyclic olefin-based resin, a polyester-based resin, a cellulose derivative (such as cellulose esters), or the like.

The thermosetting resin that is the binder resin may be, for example, a phenol resin, a urea resin, a diallyl phthalate resin, a melamine resin, a guanamine resin, an unsaturated polyester resin, a polyurethane resin, an epoxy resin, an aminoalkyd resin, a melamine-urea co-condensation resin, a silicone resin, a polysiloxane resin (including so-called silsesquioxanes such as cage-shaped and ladder-shaped silsesquioxanes), or the like.

The hard coat layer 4 may contain an organic resin and an inorganic material, or may be an organic-inorganic hybrid material. One example is one formed by a sol-gel method. Examples of the inorganic material may include silica, alumina, zirconia, and titania. Examples of the organic material may include an acrylic resin.

The filler may be made of an organic substance, an inorganic substance, or a mixture of organic and inorganic substances. The filler contained in the hard coat layer 4 may be selected from various types according to the application of the lamination film 10 from the viewpoints of antiglare properties, adhesion to an optical functional layer 5 described below, antiblocking properties, and the like. Specifically, as the filler, for example, known particles such as silica (an oxide of Si) particles, alumina (an aluminum oxide) particles, and organic fine particles may be used.

When the filler is silica particles and/or alumina particles, an average particle size of the filler is, for example, 800 nm or less, preferably 100 nm or less, and more preferably 40 nm or more and 70 nm or less. When the filler is organic fine particles, an average particle size of the organic fine particles is, for example, 10 µm or less, preferably 5 µm or less, and more preferably 3 µm or less.

A thickness of the hard coat layer 4 is, for example, preferably 0.5 µm or more, and more preferably 1 µm or more. The thickness of the hard coat layer 4 is preferably 100 µm or less. The hard coat layer 4 may be made of a single layer, or may be made of a laminate of a plurality of layers.

The optical functional layer 5 is a layer that exhibits an optical function. The optical function is a function that controls the properties of light, such as reflection, transmission, and refraction, and examples thereof include an anti-reflection function, a selective reflection function, an antiglare function, a lens function, and the like.

The optical functional layer 5 is, for example, a lamination film in which a high refractive index layer and a low refractive index layer are alternately laminated in this order from the side of the hard coat layer 4. The high refractive index layer has a higher refractive index than the low refractive index layer. The refractive indexes of the high refractive index layers may be the same or different. The refractive indexes of the low refractive index layers may be the same or different.

There is no particular limit to the total number of low refractive index layers and high refractive index layers laminated in the optical functional layer 5. For example, as shown in FIG. 2, the number of laminated layers may be four, three or less, or five or more. The total number of low refractive index layers and high refractive index layers in the optical functional layer 5 is preferably four layers or more and ten layers or less, more preferably four layers or more and six layers or less, and most preferably four layers. When the optical functional layer 5 has four laminated layers, since the number of laminated layers is small and the thickness is thin, productivity is excellent compared to when the optical functional layer 5 has five or more laminated layers.

The optical functional layer 5 exhibits an anti-reflection function by interference of light reflected at each interface in a laminate in which the high refractive index layers and the low refractive index layers are alternately laminated, and by diffusing light incident from the side of the stain-resistant layer 6.

A total thickness of the optical functional layer 5 is, for example, 20 nm or more and 1000 nm or less, and 50 nm or more and 600 nm or less.

Hereinafter, an example will be described in which the optical functional layer 5 is a laminate including four layers including a first high refractive index layer 5A, a first low refractive index layer 5B, a second high refractive index layer 5C, and a second low refractive index layer 5D laminated in this order from the side closest to the hard coat layer 4. Each of the first high refractive index layer 5A and the second high refractive index layer 5C has a higher refractive index than each of the first low refractive index layer 5B and the second low refractive index layer 5D.

The refractive indexes of the first high refractive index layer 5A and the second high refractive index layer 5C are, for example, 2.00 or more and 2.60 or less, and preferably 2.10 or more and 2.45 or less. The refractive indexes of the first high refractive index layer 5A and the second high refractive index layer 5C may be the same or different.

Examples of materials for the first high refractive index layer 5A and the second high refractive index layer 5C include niobium pentoxide (Nb₂O₅, refractive index 2.33), titanium oxide (TiO₂, refractive index 2.33 to 2.55), tungsten oxide (WO₃, refractive index 2.2), cerium oxide (CeO₂, refractive index 2.2), tantalum pentoxide (Ta₂O₅, refractive index 2.16), zinc oxide (ZnO, refractive index 2.1), indium tin oxide (ITO, refractive index 2.06), zirconium oxide (ZrO₂, refractive index 2.2), and the like. The first high refractive index layer 5A and the second high refractive index layer 5C are preferably made of niobium pentoxide. The materials constituting the first high refractive index layer 5A and the second high refractive index layer 5C may be the same or different.

The refractive indexes of the first low refractive index layer 5B and the second low refractive index layer 5D are, for example, 1.20 or more and 1.60 or less, and preferably 1.30 or more and 1.50 or less. The refractive indexes of the first low refractive index layer 5B and the second low refractive index layer 5D may be the same or different.

The first low refractive index layer 5B and the second low refractive index layer 5D contain, for example, an oxide of Si. The first low refractive index layer 5B and the second low refractive index layer 5D are layers containing, for example, SiO₂ (an oxide of Si) as a main component. The oxide of Si is easily available and has an advantage in terms of cost. A single layer of SiO₂ is colorless and transparent. In this embodiment, the main component is a component that occupies 50% by mass or more of the components contained in the layer. The refractive indexes of the first low refractive index layer 5B and the second low refractive index layer 5D may be the same or different.

When the first low refractive index layer 5B and the second low refractive index layer 5D contain an oxide of Si as the main component, they may contain less than 50% by mass of another element. A content of the elements other than the oxide of Si is preferably 10% or less. The other elements are, for example, Na, Zr, Al, and N. Na increases durability of the first low refractive index layer 5B and the second low refractive index layer 5D. Zr, Al, and N increase hardness and alkali resistance of the first low refractive index layer 5B and the second low refractive index layer 5D.

The stain-resistant layer 6 is in contact with a surface of the optical functional layer 5 on the side opposite to a surface thereof in contact with the hard coat layer 4. The stain-resistant layer 6 prevents the optical functional layer 5 from being soiled or damaged. In addition, the stain-resistant layer 6 curbs wear of the optical functional layer 5 caused by sliding of a pen when it is applied to a touch panel or the like.

The stain-resistant layer 6 is, for example, a fluorine-based organic compound. The fluorine-based organic compound is, for example, a compound containing a fluorine-modified organic group and a reactive silyl group (for example, an alkoxysilane). Commercially available products that can be used for the stain-resistant layer 6 include Optool DSX (manufactured by Daikin Co., Ltd.) and KY-100 series (manufactured by Shin-Etsu Chemical Co., Ltd.).

A thickness of the stain-resistant layer 6 is, for example, 1 nm or more and 20 nm or less, and preferably 3 nm or more and 10 nm or less. When the thickness of the stain-resistant layer 6 is 1 nm or more, sufficient abrasion resistance can be ensured when the laminate is used for a touch panel or the like. Furthermore, when the thickness of the stain-resistant layer 6 is 20 nm or less, a time required for vapor deposition is short, and thus the layer can be produced efficiently.

The stain-resistant layer 6 may contain additives such as a light stabilizer, an ultraviolet absorber, a colorant, an antistatic agent, a lubricant, a leveling agent, an antifoaming agent, an antioxidant, a flame retardant, an infrared absorber, and a surfactant, as necessary.

The protective layer 7 is a layer that protects the film during transportation and storage. The protective layer 7 may be, for example, a layer having a base material such as polypropylene, polyethylene, or polyethylene terephthalate, and an adhesive layer containing natural rubber, synthetic rubber, acrylic resin, or the like as a main component.

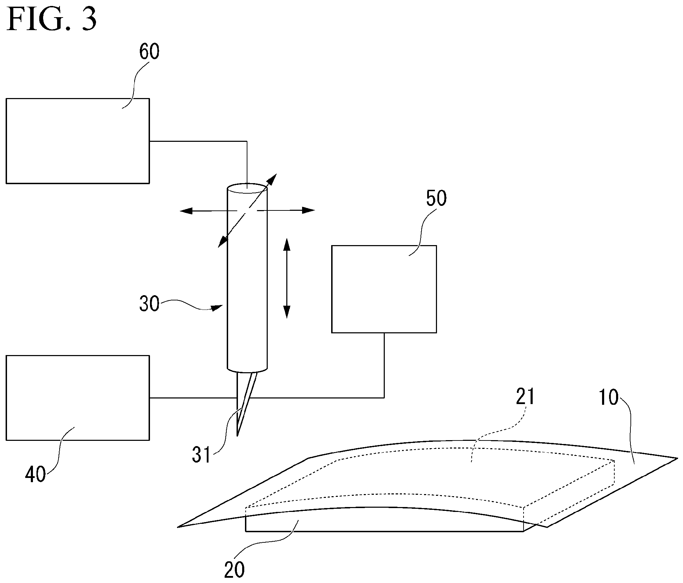

FIG. 3 is a diagram for describing the cutting step in the laminate manufacturing method according to this embodiment. In the cutting step, the lamination film 10 is cut to match a shape of the substrate 20. In the cutting step, a cutting tool 30 is used to cut off an excess portion of the lamination film 10 that protrudes from the bonding surface 21 of the substrate 20. The movement of the cutting tool 30 is controlled by a control unit 60. The cutting tool 30 has, for example, a cutting blade 31, and the cutting blade 31 is heated by a heating mechanism 40. A temperature of the cutting blade 31 can be measured by a thermometer 50.

The cutting step includes, for example, a first step of heating the cutting tool 30 and a second step of cutting the lamination film 10 using the heated cutting tool.

In the first step, the cutting tool 30 is heated. The cutting tool 30 may have, for example, the cutting blade 31 as shown in FIG. 3. The cutting blade 31 is, for example, a cutter blade, a razor blade, a knife, or the like. When the cutting tool 30 having the cutting blade 31 is used, cracks are less likely to occur on a cut surface of the lamination film 10. However, the cutting tool 30 is not limited to one having the cutting blade 31, and may be a wire or the like.

In the first step, the cutting tool 30 is heated to a temperature or higher that is lower by 65°C than a softening point temperature of the base film 3. More specifically, a temperature in the vicinity of a cutting portion of the cutting blade 31 of the cutting tool 30 is heated to a temperature or higher that is lower by 65°C than the softening point of the base film 3. The softening point is a temperature at which a material begins to soften and deform as the temperature increases. The softening point of the base film 3 can be measured, for example, using a thermomechanical analyzer (TMA) (corresponding standards: JIS K 7196, JIS K 7197, JIS R 1618). The softening point can be determined from an inflection point of a graph obtained by the thermomechanical analysis (TMA). When the base film 3 is a laminate of a plurality of films, the cutting tool 30 is heated to a temperature or higher that is 65°C lower than the highest softening point temperature of the respective softening points of the laminated films.

The softening point of the TAC film is 255°C. The softening point of the PET film is 240°C.

As described above, the temperature of the cutting portion of the cutting tool 30 is set to a temperature or higher that is lower by 65°C than the softening point temperature of the base film 3. For example, when the base film 3 is a TAC film, the temperature of the cutting portion of the cutting tool 30 is set to 190°C or higher, and when the base film 3 is a PET film, the temperature of the cutting portion of the cutting tool 30 is set to 175°C or higher. Further, the temperature of the cutting portion of the cutting tool 30 is preferably lower than a melting point of the base film 3, and more preferably less than a temperature that is higher by 35°C than the softening point temperature of the base film 3. When the temperature of the cutting tool 30 is too high, a molten material will adhere to a cutting surface of the cutting blade, making it difficult to cut the base film 3.

The temperature of the cutting portion of the cutting tool 30 may drop by a certain temperature, for example, when the base film 3 is cut. That is, the temperature of the cutting tool 30 only needs to be equal to or higher than a temperature that is lower by 65°C than the softening point temperature of the base film 3 at the start of cutting, and the temperature may drop during cutting. Preferably, a maximum temperature difference between the temperature of the cutting portion at the start of cutting and the temperature of the cutting portion during cutting is 15°C or less. When the temperature difference is sufficiently low, cracks are less likely to occur in the base film 3 .

Next, in the second step, the lamination film 10 is cut using the heated cutting tool 30. The lamination film 10 is cut into a predetermined shape by moving the cutting tool 30 along an external shape of the substrate 20. When the cutting tool 30 is a punching tool, a shape of a cutting body of the punching tool is processed to match the external shape of the substrate 20, and then the lamination film 10 is cut by punching it.

In the laminate manufacturing method according to this embodiment, since the lamination film 10 is cut using the cutting tool 30 heated to a temperature or higher that is lower by 65°C than the softening point temperature, cracks are less likely to occur. When an attempt is made to cut the lamination film 10 without heating, a distortion will occur in the organic layer represented by, for example, the base film 3, when the cutting tool 30 comes into contact with the lamination film 10. Due to this distortion, stress is applied to the inorganic layer represented by the optical functional layer 5, and thus cracks occur in the inorganic layer. On the other hand, since the laminate manufacturing method according to this embodiment uses the cutting tool 30 heated to a temperature or higher that is lower by 65°C than the softening point temperature, when the cutting tool 30 comes into contact with the lamination film 10, the organic layer is deformed, and the stress applied to the inorganic layer is relieved. As a result, when the laminate manufacturing method according to this embodiment is used, it is possible to curb the occurrence of cracks in the inorganic layer.

Furthermore, in the laminate manufacturing method according to this embodiment, a target to be heated is the cutting tool 30, and thus even when the substrate 20 and the lamination film 10 are large, there is no need to enlarge the equipment. Furthermore, only the vicinity of a portion to be cut in the lamination film 10 is heated, and thus it is possible to curb the occurrence of distortion or the like in the entire lamination film 10.

### "Laminate manufacturing device"

A laminate manufacturing device according to this embodiment includes a bonding device and a cutting device. The bonding device and the cutting device are separate devices and may operate independently of each other.

The bonding device is a device that sticks a lamination film to a substrate, and a known laminating device may be used.

The cutting device is a device that cuts the lamination film to match the shape of the substrate. As shown in FIG. 3, the cutting device has a heating mechanism 40 that heats the cutting tool 30 to a temperature or higher that is lower by 65°C than the softening point temperature of the base film 3. The heating mechanism 40 is, for example, a heater. The softening point temperature of the base film 3 is measured in advance using TMA or the like, and the heating mechanism 40 heats the cutting blade 31 of the cutting tool 30 to a temperature or higher that is lower by 65°C than the softening point of the base film 3 measured in advance.

In addition to the heating mechanism 40, the cutting device may have a thermometer 50 and a control unit 60. The thermometer 50 measures the temperature of the cutting tool 30. The thermometer 50 may be of a contact type or a non-contact type.

The control unit 60 moves the cutting tool 30 along an outer periphery of the substrate 20. The control unit 60 includes, for example, an imaging unit that measures the external shape of the substrate 20, a driving unit that moves the cutting tool 30 along the measured external shape, and a processor that processes measurement results of the imaging unit and operates the driving unit on the basis of processing results. The driving unit includes, for example, a horizontal movement mechanism that moves the cutting tool 30 within a plane in which the substrate 20 extends, and a lifting mechanism that moves the cutting tool 30 up and down. Although FIG. 3 illustrates a mechanism for moving the cutting tool 30 relative to the fixed substrate 20, the substrate 20 may be moved relative to the fixed cutting tool 30.

The laminate manufacturing device according to this embodiment is capable of heating the cutting tool 30 to a temperature or higher that is lower by 65°C than the softening point temperature, and when this producing device is used, cracks are less likely to occur when the lamination film 10 is processed into a desired shape.

Although the preferred embodiment of the present invention has been described in detail above, the present invention is not limited to the specific embodiment, and various modifications and changes are possible within the scope of the gist of the present invention described in the claims.

### [Examples]

### "Example 1"

First, the lamination film 10 shown in FIG. 2 was prepared. The lamination film 10 had the following layer configurations:
Release layer 1: PET film having a thickness of 75 µm
Adhesive layer 2: Silicone-based adhesive film having a thickness of 25 µm
Base film 3: TAC film having a thickness of 80 µm
Hard coat layer 4: Acrylic-based hard coat having a thickness of 6 µm
Optical functional layer 5: Layer having a total thickness of 185 µm, in which high refractive index layers (Nb₂O₅) and low refractive index layers (SiO₂) are alternately laminated. The high refractive index layers and the low refractive index layers each had two layers, and the optical functional layer 5 was a laminate having a total of four layers. Stain-resistant layer 6: Layer formed by vapor deposition of an alkoxysilane compound having a perfluoropolyether group (KY-1901: manufactured by Shin-Etsu Chemical Co., Ltd.)
Protective layer 7: Polyolefin-based protective film having a thickness of 59 µm

The acrylic-based hard coat used for the hard coat layer 4 is prepared by applying a photocurable resin composition shown in Table 1 below with a gravure coater and curing the composition.

**[Table 1]**

| | Product name | Maker | Structure | Mixing ratio |
|---|---|---|---|---|
| Acrylate | CN968 | Sartomer | Urethane acrylate oligomer | 8% |
| | SR444 | Sartomer | Pentaerythritol triacrylate | 7% |
| | SR610 | Sartomer | Polyethylene glycol (600) diacrylate | 11% |
| Silica particles | IPA-ST-L | Nissan Chemical | Silica sol with particle size of 40~50nm (30% solids, IPA solvent) | 37% |
| Initiator | Irgacure 184 | BASF | Initiator | 2% |
| Solvent | PGMA | | Propylene glycol monomethyl ether acetate | 30% |
| | Butyl acetate | | | 5% |
| Total | | | | 100% |
| Leveling agent | BYK377 | BYK | Polyether modified polydimethylsiloxane | 0.01 weight part per 100 weight parts of the above total |

Next, a glass substrate was prepared as the substrate 20. Then, the release layer 1 was peeled off from the lamination film 10, and the lamination film 10 was stuck to the substrate 20 so that the adhesive layer 2 was in close contact with the glass substrate. The external shape of the lamination film 10 was larger than the external shape of the substrate 20, and the lamination film 10 protruded from the outer periphery of the substrate 20 by about 10 mm.

Next, a center portion of the razor blade was heated to 300°C, and then an excess portion of the lamination film 10 was cut off. The temperature of the cutting portion of the razor blade was 200°C. A softening point temperature of the TAC film was 255°C, and a temperature of the cutting portion of the razor blade was a temperature (190°C) or higher that was lower by 65°C than the softening point temperature of the base film 3. The maximum temperature difference between the temperature of the cutting portion at the start of cutting and the temperature of the cutting portion during cutting was 8°C.

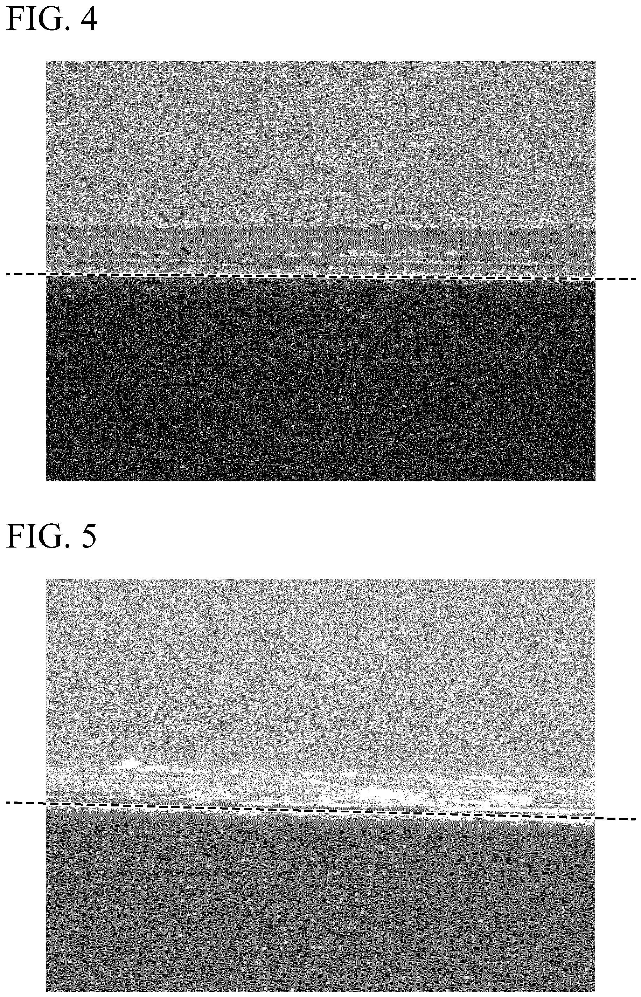

FIG. 4 is a diagram illustrating measurement of a cut surface of the lamination film 10 of Example 1. In FIG. 4, a lower half of an image is the lamination film, and the lamination film 10 is cut along a dotted line. FIG. 4 is a diagram of the lamination film 10 when seen in a cutting direction, with the front side of the drawing corresponding to the upper surface of the lamination film 10. The measurement of the cut surface was performed using a microscope VHX7000 (manufactured by Keyence Corporation). As shown in FIG. 4, no cracks were found on the cut surface of the lamination film of Example 1.

### "Example 2"

Example 2 is different from Example 1 in that the center portion of the razor blade was heated to a temperature of 400°C, and the temperature of the cutting portion of the razor blade was set to 260°C to cut off the excess portion of the lamination film 10. The other conditions were the same as those of Example 1, and the lamination film 10 was cut. The maximum temperature difference between the temperature of the cutting portion at the start of cutting and the temperature of the cutting portion during cutting was 12°C.

FIG. 5 is a diagram illustrating measurement of a cut surface of the lamination film 10 of Example 2. In FIG. 5, a lower half of an image is the lamination film, and the lamination film 10 is cut along a dotted line. FIG. 5 is a diagram of the lamination film 10 when seen in the cutting direction, with the front side of the drawing corresponding to the upper surface of the lamination film 10. As shown in FIG. 5, no cracks were found on the cut surface of the lamination film 10 of Example 2. However, in the cut surface of Example 2, a molten material of the lamination film 10 was attached to the cut surface of the cutting blade.

### "Comparative example 1"

Comparative Example 1 is different from Example 1 in that the razor blade was not heated, and the temperature of the razor blade was kept at room temperature. The other conditions were the same as those of Example 1, and the lamination film 10 was cut.

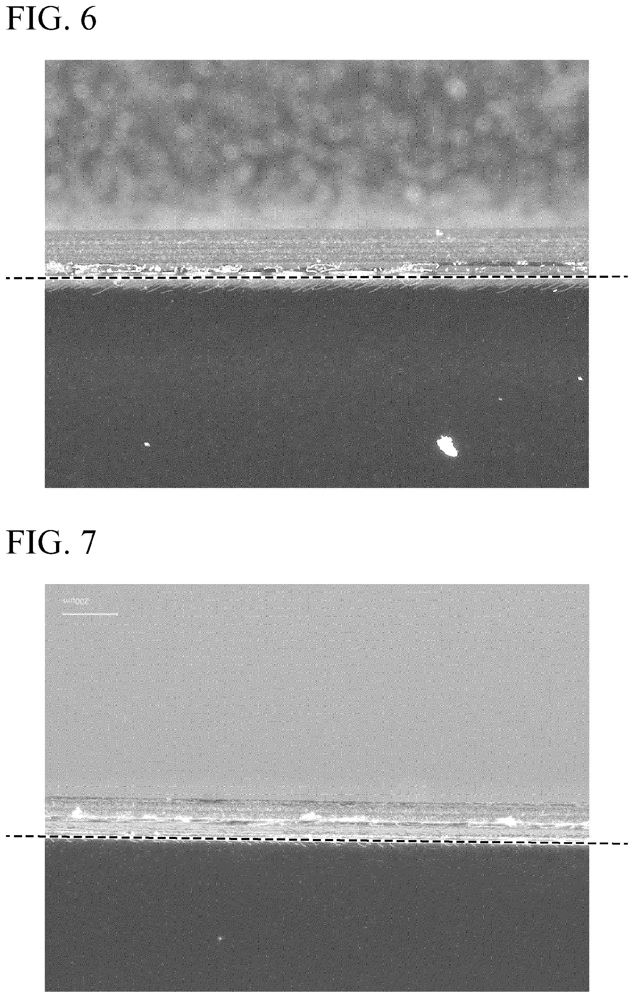

FIG. 6 is a diagram illustrating measurement of a cut surface of the lamination film 10 of Comparative example 1. In FIG. 6, a lower half of an image is the lamination film, and the lamination film 10 is cut along a dotted line. FIG. 6 is a diagram of the lamination film 10 when seen in the cutting direction, with the front side of the drawing corresponding to the upper surface of the lamination film 10. As shown in FIG. 6, cracks were found on the cut surface of the lamination film 10 of Comparative Example 1.

### "Comparative example 2"

Comparative example 2 is different from Example 1 in that the center portion of the razor blade was heated to a temperature of 200°C, and the temperature of the cutting portion of the razor blade was set to 150°C to cut off the excess portion of the lamination film 10. The other conditions were the same as those in Example 1, and the lamination film 10 was cut. The maximum temperature difference between the temperature of the cutting portion at the start of cutting and the temperature of the cutting portion during cutting was 23°C.

FIG. 7 is a diagram illustrating measurement of the cut surface of the lamination film 10 of Comparative example 2. In FIG. 7, a lower half of an image is the lamination film, and the lamination film 10 is cut along a dotted line. FIG. 7 is a diagram of the lamination film 10 when seen in the cutting direction, with the front side of the drawing corresponding to the upper surface of the lamination film 10. As shown in FIG. 7, cracks were found on the cut surface of the lamination film of Comparative example 2.

As shown in Example 1, Example 2, Comparative example 1, and Comparative example 2, when the temperature of the cutting portion of the cutting tool was set to a temperature or higher that is lower by 65°C than the softening point temperature of the base film, and then the lamination film was cut, no cracks occurred on the cut surface. Moreover, as shown in Examples 1 and 2, it was confirmed that the lamination film 10 could be cut more cleanly by not increasing the temperature of the cutting portion of the cutting tool too high.

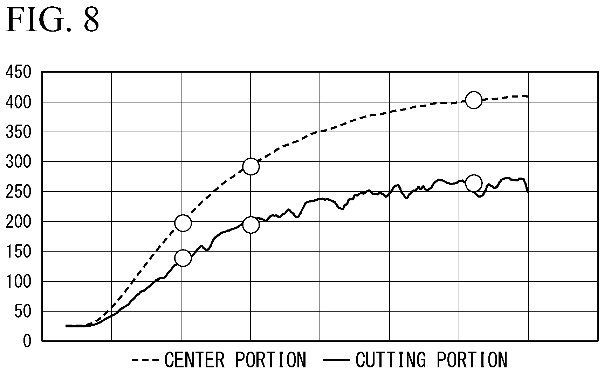

FIG. 8 is a diagram showing the relationship of temperature between the center portion and the cutting portion of the razor blade which is a cutting tool in Example 1, Example 2, Comparative example 1, and Comparative example 2. There is a correlation between the temperature of the central portion and the temperature of the cutting portion, and the temperature of the cutting portion can be determined from the temperature of the center portion.

### REFERENCE SIGNS LIST

1 Releases layer
2 Adhesive layer
3 Base film
4 Hard coat layer
5 Optical functional layer
5A First high refractive index layer
5B First low refractive index layer
5C Second high refractive index layer
5D Second low refractive index layer
6 Stain-resistant layer
7 Protective layer
10 Lamination film
20 Substrate
21 Bonding surface
30 Cutting tool
31 Cutting blade
40 Heating mechanism
50 Thermometer
60 Control unit

## Claims

1. A laminate manufacturing method, comprising:
a bonding step of sticking a lamination film having a base film and an inorganic layer laminated on the base film to a substrate; and
a cutting step of cutting the lamination film to match a shape of the substrate,
wherein, in the cutting step, a cutting tool is heated to a temperature or higher that is lower by 65°C than a softening point temperature of the base film, and the lamination film is cut.

2. The laminate manufacturing method according to claim 1, wherein the cutting tool has a cutting blade.

3. The laminate manufacturing method according to claim 1, wherein the lamination film has an adhesive layer, the base film, and the inorganic layer, and
the inorganic layer is formed by alternately laminating a low refractive index layer and a high refractive index layer having a refractive index higher than a refractive index of the low refractive index layer.

4. The laminate manufacturing method according to claim 1, wherein a bonding surface of the substrate to which the lamination film is stuck is curved.

5. A laminate manufacturing device, comprising:
a bonding device configured to stick a lamination film having a base film and an inorganic layer laminated on the base film to a substrate; and
a cutting device configured to cut the lamination film to match a shape of the substrate,
wherein the cutting device has a heating mechanism that heats a cutting tool to a temperature or higher than 65°C lower than a softening point temperature of the base film.

6. The laminate manufacturing device according to claim 5, wherein the cutting device includes a thermometer configured to measure a temperature of the cutting tool and a control unit configured to move the cutting tool along an outer periphery of the substrate.
